# EUROPÄISCHE PATENTANMELDUNG

(11) **EP 3 509 247 A1**
(43) Veröffentlichungstag der Anmeldung: **10.07.2019**
(21) Anmeldenummer: 18150146.1
(22) Anmeldetag: 03.01.2018
(51) Int. Cl.: H04L 9/08

(54) **VERFAHREN UND SCHLÜSSELGENERATOR ZUM RECHNERGESTÜTZTEN ERZEUGEN EINES GESAMTSCHLÜSSELS**

(71) Anmelder: Siemens Aktiengesellschaft, 80333 München (DE)
(72) Erfinder: Falk, Rainer, 85586 Poing (DE); Feist, Christian Peter, 80689 München (DE); Schneider, Daniel, 80796 München (DE); Seeger, Guido, 91083 Baiersdorf (DE)

(57) **Zusammenfassung**

Die Erfindung betrifft die Nutzung und Kombination von zwei oder mehreren Sicherheitsmodulen zur sicheren Berechnung eines Gesamtschlüssels, wobei nie mehr als ein Teilschlüssel für die Berechnung des Gesamtschlüssels im Betriebssystem vorhanden ist. Die Sicherheitsmodule (die beispielsweise auch als Vertrauensanker bezeichnet werden können) können dabei beispielsweise Trusted Platform Module, als Hardware Security Module implementiert werden. Auch ist insbesondere durch die Verteilung der Geheimnisse auf mehrere Sicherheitsmodule die Berechnung des Gesamtschlüssels auf mehrere Instanzen verteilt. Die Berechnung des Gesamtschlüssels muss insbesondere nicht von der CPU durchgeführt werden, sondern wird vorzugsweise vom letzten Sicherheitsmodul in der Kette (also insbesondere die seriell kommunikativ verbundenen Sicherheitsmodule) berechnet. Weiterhin können insbesondere den Sicherheitsmodulen flexibel eine oder mehrere schlüsselgeneratorinterne wie auch wie auch eine oder mehrere schlüsselgeneratorexterne Sicherheitsmodule verwendet werden. Dies ist insbesondere dahingehend vorteilhaft, um beispielsweise durch einen Wechseln eines schlüsselgeneratorexternen Sicherheitsmoduls (insbesondere auch wechselbares Sicherheitsmodul genannt) eine kryptographische Sicherheit oder ein Sicherheitsniveau nachträglich noch verändern bzw. verbessern zu können. Es kann beispielsweise auch notwendig sein, dass das Sicherheitsniveau aufgrund von Exportbeschränkungen verringert werden muss, so kann beispielsweise durch den Austausch eines schlüsselgeneratorexternen Sicherheitsmoduls mit einem hohen Sicherheitsniveau durch ein schlüsselgeneratorexternes Sicherheitsmodul mit einem niedrigeren Sicherheitsniveau die Anforderung der Exportbeschränkung erfüllt werden ohne den gesamten Schlüsselgenerator austauschen zu müssen. Der Gesamtschlüssel kann insbesondere reproduzierbar anhand der gleichen Initialisierungsparameter mittels des Schlüsselgenerators berechnet werden.

## Beschreibung

Die Erfindung bezieht sich auf ein Verfahren und Schlüsselgenerator zum rechnergestützten Erzeugen eines Gesamtschlüssels.

Eine wichtige Anforderung für kryptographische Sicherheitsverfahren in eingebetteten Systemen ist die sichere Speicherung kryptographischer Schlüssel. Häufig werden kryptographische Schlüssel in einem Sicherheitsmodul gespeichert, um unberechtigte Zugriffe zu verhindern, z.B. in Trusted Platform Modules (TPMs), in Firmware-basierten Sicherheitsmodulen oder in Hardware Security Modules (HSMs). Bei einem solchen herkömmlichen Sicherheitsmodul liegen Integrität und Vertraulichkeit des Schlüsselmaterials allerdings bei einer einzigen Komponente, die unter Umständen angreifbar ist oder durch neue Methoden in Zukunft angreifbar wird. Es besteht daher ein Bedarf an einer noch robusteren Schlüsselspeicherung in eingebetteten Systemen, besonders solchen die über einen längeren Zeitraum in Betrieb sind.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, das Dokument EP 3028140 B1, das Dokument EP 17175275 und das Dokument US 8 843 761 B2 bekannt.

Eine Aufgabe der vorliegenden Erfindung ist es, ein Verfahren und einen Schlüsselgenerator bereitzustellen, die eine höhere Sicherheit bieten als herkömmliche Systeme.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein erster Aspekt der Erfindung betrifft einen Schlüsselgenerator aufweisend:
- mehrere Sicherheitsmodule, wobei
   - zumindest ein Teil der Sicherheitsmodule jeweils eine Schlüsselableitungseinheit zum Berechnen eines Teilschlüssels anhand eines Eingabeparameters umfassen,
   - vorzugsweise jedes Sicherheitsmodul jeweils einen Teilschlüssel berechnet,
   - die Sicherheitsmodule seriell kommunikativ verbunden sind,
   - eines der Sicherheitsmodule ein Eingabesicherheitsmodul ist,
   - zur Generierung eines Gesamtschlüssel dem Eingabesicherheitsmodul ein Initialisierungsparameter als der Eingabeparameter übermittelt wird oder das Eingabesicherheitsmodul einen Initialisierungsparameter als einen ersten Teilschlüssel (der Teilschlüssel) bereitstellt,
   - jeweils der berechnete Teilschlüssel des jeweiligen Sicherheitsmoduls als Eingabeparameter des darauffolgenden Sicherheitsmoduls übermittelt wird,
- eine Ausgabeschnittstelle, die den berechneten Teilschlüssel eines letzten Sicherheitsmoduls der seriell kommunikativ verbundenen Sicherheitsmodule als Gesamtschlüssel bereitstellt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden.

Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger oder z. B. ein wechselbares Speichermodul verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion gebildet oder berechnet werden. Weiterhin kann darunter insbesondere auch eine digitale Signatur oder ein kryptographischer Nachrichtenauthentisierungscode verstanden werden.

Unter "Berechnen einer Teilprüfsumme" kann im Zusammenhang mit der Erfindung beispielsweise eine Berechnung eines Teilschlüssels mittels kryptographischer Schlüsselableitungsverfahren verstanden werden oder auch ein Bereitstellen eines Teilschlüssels, der z. B. in einem Speicher eines jeweiligen Sicherheitsmoduls gespeichert ist.

Unter einem "Sicherheitsniveau" kann im Zusammenhang mit der Erfindung beispielsweise die Qualität der kryptographischen Sicherheit eines verwendeten Verfahrens oder Moduls verstanden werden. Zusätzlich oder alternativ kann unter "Sicherheitsniveau" beispielsweise auch die Sicherheit verstanden werden, die ein Sicherheitsmodul bietet um sensitive Daten vor Unbefugten zu schützen. Dabei bedeutet insbesondere ein niedriges Sicherheitsniveau einen schlechteren Schutz und ein hohes Sicherheitsniveau einen guten bzw. hochwertigen Schutz. Unter "sensitiven Daten" können im Zusammenhang mit der Erfindung beispielsweise das verwendete Schlüsselableitungsverfahren (z. B. ein kryptographisches Schlüsselableitungsverfahren) und Schlüssel oder kryptographische Schlüssel, die für die Berechnung der Teilschlüssel verwendet werden. Alternativ oder zusätzlich können die sensitiven Daten auch Initialisierungsparameter für die Schlüsselableitungsverfahren sein.

Unter "schlüsselgeneratorextern" können im Zusammenhang mit der Erfindung beispielsweise verstanden werden, dass z. B. eine Kommunikation mit Geräten oder Teilnehmern stattfindet, die kein integraler Bestandteil des Schlüsselgenerators sind, wobei insbesondere wechselbare Sicherheitsmodule ebenfalls ein integraler Bestandteil des Sicherheitsmoduls sind.

Die Erfindung ist insbesondere dahingehend vorteilhaft, damit vorzugsweise durch die Nutzung und Kombination von zwei oder mehreren Sicherheitsmodulen nie mehr als ein Teilschlüssel im Betriebssystem vorhanden ist. Die Sicherheitsmodule (die beispielsweise auch als Vertrauensanker oder Trust Anchor bezeichnet werden können) können dabei beispielsweise Trusted Platform Module sein oder als Firmware Security Module oder Hardware Security Module implementiert werden. Auch ist insbesondere durch die Verteilung der Geheimnisse auf mehrere Sicherheitsmodule die Berechnung des Gesamtschlüssels auf mehrere Instanzen verteilt. Die Berechnung des Gesamtschlüssels muss insbesondere nicht von der CPU durchgeführt werden, sondern wird vorzugsweise vom letzten Sicherheitsmodul in der Kette (also insbesondere die seriell kommunikativ verbundenen Sicherheitsmodule) berechnet. Weiterhin können insbesondere den Sicherheitsmodulen flexibel eine oder mehrere schlüsselgeneratorinterne wie auch wie auch eine oder mehrere schlüsselgeneratorexterne Sicherheitsmodule verwendet werden. Dies ist insbesondere dahingehend vorteilhaft, um beispielsweise einen Wechseln eines schlüsselgeneratorexternen Sicherheitsmoduls (insbesondere auch wechselbares Sicherheitsmodul genannt) eine kryptographische Sicherheit oder ein Sicherheitsniveau nachträglich noch verändern bzw. verbessern zu können. Es kann beispielsweise auch notwendig sein, dass das Sicherheitsniveau aufgrund von Exportbeschränkungen verringert werden muss, so kann beispielsweise durch den Austausch eines schlüsselgeneratorexternen Sicherheitsmoduls mit einem hohen Sicherheitsniveau durch ein schlüsselgeneratorexternes Sicherheitsmodul mit einem niedrigeren Sicherheitsniveau die Anforderung der Exportbeschränkung erfüllt werden, ohne den gesamten Schlüsselgenerator austauschen zu müssen. Der Gesamtschlüssel kann insbesondere reproduzierbar anhand der gleichen Initialisierungsparameter mittels des Schlüsselgenerators berechnet werden. Die Erfindung ist zudem dahingehend vorteilhaft, damit der Gesamtschlüssel nie im Betriebssystem vorhanden ist bzw. in einem vom Betriebssystem verwalteten Speicher vorhanden ist.

Bei einer ersten Ausführungsform des Schlüsselgenerators sind die jeweiligen Sicherheitsmodule mit dem direkt benachbarten Sicherheitsmodul direkt kommunikativ verbunden.

Der Schlüsselgenerator ist dahingehend vorteilhaft, um insbesondere eine Kommunikation über einen Bus oder einen Prozessor zu vermeiden, auf den beispielsweise andere Hardware oder Softwarekomponenten zugreifen können. Hierdurch wird insbesondere ein höherer Schutz von sensiblen Daten erreicht, da vorzugsweise nur die entsprechenden Sicherheitsmodule direkt miteinander kommunizieren. Bei den sensiblen Daten kann es sich beispielsweise um private oder geheime Schlüssel, um einen für eine Schlüsselgenerierung vorgesehenen Private Primary Seed Parameter, oder um Parameter für die Berechnung eines Teilschlüssels durch ein jeweiliges Sicherheitsmodul handeln oder es handelt sich bei den sensiblen Daten um das spezifisch verwendete Schlüsselabteilungsverfahren oder den Teilschlüssel selbst. Dabei werden insbesondere die Teilschlüssel durch die Sicherheitsmodule selbst berechnet, wobei die Sicherheitsmodule hierfür beispielsweise einen eigenen Prozessor umfassen können. Insbesondere werden durch die einzelnen Sicherheitsmodule auf unterschiedliche Weise ihre jeweiligen sensiblen Daten geschützt, die zur Berechnung eines jeweiligen Teilschlüssels relevant sind. Insbesondere umfassen die Sicherheitsmodule voneinander unterschiedliche sensible Daten zur Berechnung ihres jeweiligen Teilschlüssels. Bei den sensiblen Daten kann es sich beispielsweise um kryptographische Parameter (z. B. verwendete kryptographische Schlüssel) zur Berechnung eines entsprechenden Teilschlüssels eines entsprechenden Sicherheitsmoduls handeln. Zusätzlich oder alternativ kann es sich beispielsweise um die Eingabeparameter für das entsprechende Modul und/der das verwendete Schlüsselableitungsverfahren handeln. Der Begriff Schlüsselableitung ist insbesondere dabei breit zu verstehen. Dazu kann beispielsweise eine Schlüsselableitungsfunktion wie PBKDF2, HMAC-SHA256, AES-CMAC, AES-ECB oder eine Schlüsselgenerierungsfunktion verstanden werden, die aus einem Private Primary Seed einen privaten Schlüssel für ein asymmetrisches kryptographisches Verfahren generiert. Methoden zum generieren eines privaten kryptographischen Schlüssels bzw. zum Bilden eines Schlüsselpaars aus privaten und zugeordnetem öffentlichen Schlüssel aus einem Private Primary Seed Parameter sind insbesondere aus dem Standard TPM 2.0 bekannt.

Bei einer weiteren Ausführungsform des Schlüsselgenerators sind die jeweiligen Sicherheitsmodule mit dem direkt benachbarten Sicherheitsmodul über einen Prozessor kommunikativ verbunden.

Der Schlüsselgenerator ist dahingehend vorteilhaft, um insbesondere die rechenaufwendigen durch den Prozessor durchzuführen. Vorzugsweise ist diese kommunikative Verbindung durch eine Sicherheitseinheit geschützt. Beispielsweise kann dies durch eine elektromagnetische Abschirmung realisiert werden, um beispielsweise Seitenkanalangriffe zu unterbinden.

Bei einer weiteren Ausführungsform des Schlüsselgenerators implementieren die Schlüsselableitungseinheiten jeweils ein Schlüsselableitungsverfahren, wobei die Schlüsselableitungsverfahren vorzugsweise von mindestens zwei verschiedenen Typen sind.

Der Schlüsselgenerator ist dahingehend vorteilhaft, um insbesondere unterschiedliche Schlüsselableitungsverfahren zu Verwenden und miteinander zu kombinieren, damit vorzugsweise die Sicherheit der Gesamtschlüsselberechnung verbessert wird. Dies ist dahingehend vorteilhaft, um beispielsweise die Sicherheit des Schlüsselgenerators zu gewährleisten, selbst wenn eines der verwendeten Schlüsselableitungsverfahren nicht mehr als sicher gilt. Vorzugsweise wird dabei ein erster Teil der Teilschlüssel mit einem ersten Schlüsselableitungsverfahren berechnet, das durch eine erste Gruppe von Sicherheitsmodulen mittels ihrer entsprechenden Schlüsselableitungseinheiten implementiert wird. Beispielsweise wird ein zweiter Teil der Teilschlüssel mit einem zweiten Schlüsselableitungsverfahren berechnet, das durch eine zweite Gruppe von Sicherheitsmodulen mittels ihrer entsprechenden Schlüsselableitungseinheiten implementiert wird. Insbesondere kann dieses Konzept auf weitere Schlüsselableitungsverfahren und weitere Gruppen von Sicherheitsmodulen erweitert werden. Als Schlüsselableitungsverfahren können beispielsweise kryptographische Hashfunktionen, symmetrische oder asymmetrische Verfahren verwendet werden, wobei kryptographische Schlüssel verwendet werden, um den entsprechenden Teilschlüssel zu berechnen.

Bei einer weiteren Ausführungsform des Schlüsselgenerators umfassen die Sicherheitsmodule jeweils eine Sicherheitseinheit, wobei die Sicherheitseinheiten von vorzugsweise mindestens zwei unterschiedlichen Typen sind, wobei ein jeweiliges Sicherheitsmodul vorzugsweise nur eine Sicherheitseinheit eines bestimmten Typs umfasst.

Der Schlüsselgenerator ist dahingehend vorteilhaft, um insbesondere mittels der Sicherheitseinheiten sensible Daten, die auf einem Sicherheitsmodul gespeichert sind, vor einem Zugriff durch Unbefugte zu schützen. Die Sicherheitseinheiten können dabei beispielsweise auf unterschiedliche Weise realisiert sein. Beispielsweise kann es sich hierbei um mechanische und/oder elektrische Sicherheitseinheiten handeln. Dies ist z. B. eine Bohrschutzfolie, die bei einer Beschädigung die sensiblen Daten des entsprechenden Sicherheitsmoduls löscht. Alternativ oder zusätzlich kann es sich beispielsweise auch um ein schwer zu öffnendes Gehäuse eines Sicherheitsmoduls handeln, da beispielsweise das Gehäuse beispielsweise aus Stahl gefertigt ist und zugeschweißt ist. Alternativ oder zusätzlich kann es sich beispielsweise auch um eine elektromagnetische Abschirmung handeln um Seitenkanalangriffe auf das Sicherheitsmodul zu unterbinden. Ein Sicherheitsmodul kann insbesondere in einer Variante sicherheitsmodulexterne Tampersensoren, z. B. Gehäuseschalter, Strahlungssensoren oder ein extern bereitgestelltes Tamperalarmsignal auswerten, z.B. einen von einer Alarmanlage bereitgestelltes Alarmsignal. Die jeweiligen Sicherheitsmodule des Schlüsselgenerators können dabei beispielsweise Sicherheitseinheiten unterschiedlichen Typs umfassen. Ein Zugriff durch einen Unbefugten wird durch die Kombination der unterschiedlichen Typen von Sicherheitseinheiten deutlich erschwert, da zum Umgehen eines einzigen Typs schon eine hohe Fachkenntnis erforderlich ist.

Bei einer weiteren Ausführungsform des Schlüsselgenerators ist den Sicherheitsmodulen jeweils ein Sicherheitsniveau zugeordnet, wobei die Sicherheitsniveaus von vorzugsweise mindestens zwei unterschiedlichen Typen sind.

Der Schlüsselgenerator ist dahingehend vorteilhaft, um insbesondere mehrere Sicherheitsmodule mit unterschiedlichen Sicherheitsniveaus miteinander zu kombinieren. Das Sicherheitsniveau gibt dabei insbesondere an, wie schwierig es für einen Angreifer ist auf sensible Daten eines Sicherheitsmoduls zuzugreifen. Je höher dabei das Sicherheitsniveau ist, umso schwieriger ist es für einen Angreifer Zugriff zu erhalten. Das Sicherheitsniveau selbst wird dabei beispielsweise durch die Art der verwendeten Sicherheitseinheiten und/oder der verwendeten Schlüsselableitungsverfahren und/oder die Art der sensiblen Daten bestimmt. Dies ist beispielsweise dahingehend vorteilhaft um den Schlüsselgenerator kostengünstiger zu fertigen. Es können auf diese Weise insbesondere Sicherheitsmodule in einem sicherheitskritischen Bereich (z. B. das Eingabesicherheitsmodul) des Schlüsselgenerators mit einem hohen Sicherheitsniveau eingesetzt werden. Für die restlichen Sicherheitsmodule kann beispielsweise ein niedrigeres Sicherheitsniveau als das Sicherheitsniveau des Eingabesicherheitsmoduls akzeptiert sein.

Bei einer weiteren Ausführungsform des Schlüsselgenerators sind die Sicherheitsmodule mindestens zwei Sicherheitsmodule, die auf Basis unterschiedlicher Plattformen implementiert sind.

Der Schlüsselgenerator ist dahingehend vorteilhaft, um insbesondere unterschiedliche Plattformen miteinander zu kombinieren. Hierdurch wird insbesondere erreicht, dass der Schlüsselgenerator noch als sicher angesehen wird, selbst wenn eine einzelne Plattform irgendwann als unsicher gilt. Eine Plattform kann dabei beispielsweise ein Trusted Platform Module (TPM) oder ein Hardware Security Module (HSM) sein. Es ist beispielsweise auch möglich, dass ein Sicherheitsmodul auf einer CPU selbst realisiert ist, z. B. in Form eines obfuszierten Software-basierten Sicherheitsmoduls, in Form einer Trust Zone Applikation, in Form einer integrierten Hardware-Crypto-Funktion (HW Crypto Engine), in Form eines Programmcodes für eine geschützte Codeausführung (Intel TXT, Intel SGX) auf der CPU. Es ist beispielsweise auch möglich, dass ein Sicherheitsmodul als wechselbare Hardwarekomponente realisiert ist, z. B. auf einem ansteckbaren Dongle, Konfigurationsspeichermodul, IO-Modul, Erweiterungsmodul. Dies ist beispielsweise dahingehend vorteilhaft, damit ein Schlüssel nur bildbar ist, wenn alle Sicherheitsmodule vorliegen. Weiterhin ist dies insbesondere vorteilhaft, wenn eine Plug-and-Work-Konfiguration einer Anlage erfolgt: Dann ist der Gesamtschlüssel insbesondere nur in einer bestimmten, vorzugsweise fest vorgegebenen, Hardware-Konfiguration bildbar.

Bei einer weiteren Ausführungsform des Schlüsselgenerators umfassen die seriell kommunikativ verbunden Sicherheitsmodule mindestens drei Sicherheitsmodule, wobei das erste Sicherheitsmodul das Eingabesicherheitsmodul ist, wobei das zweite Sicherheitsmodul mindestens ein internes Sicherheitsmodul ist, wobei das zweite Sicherheitsmodul vorzugsweise mehrere interne Sicherheitsmodule umfasst und wobei das dritte Sicherheitsmodul das letzte Sicherheitsmodul ist.

Der Schlüsselgenerator ist dahingehend vorteilhaft, um insbesondere die Sicherheit des Schlüsselgenerators dadurch zu erhöhen, dass zumindest für einen Teil der internen Sicherheitsmodule eine Kommunikation mit Komponenten oder Schnittstellen außerhalb des Schlüsselgenerators unterbunden ist.

Bei einer weiteren Ausführungsform des Schlüsselgenerators umfassen die internen Sicherheitsmodule jeweils eine Sicherheitseinheit, die eine schlüsselgeneratorexterne Kommunikation unterbindet.

Der Schlüsselgenerator ist dahingehend vorteilhaft, um insbesondere die Sicherheit des Schlüsselgenerators dadurch zu erhöhen, dass zumindest für einen Teil der internen Sicherheitsmodule eine Kommunikation mit Komponenten oder Schnittstellen außerhalb des Schlüsselgenerators unterbunden ist. Insbesondere ist dabei mit einer schlüsselgeneratorexternen Kommunikation gemeint, dass die entsprechenden Sicherheitsmodule vorzugsweise ausschließlich über die vorgegebenen Schnittstellen kommunizieren und eine ungewollte Kommunikation bzw. ein ungewolltes Abgreifen von Daten, z. B. über einen Seitenkanalangriff, unterbunden wird.

Bei einer weiteren Ausführungsform des Schlüsselgenerators weisen die internen Sicherheitsmodule ein niedrigeres Sicherheitsniveau auf als das erste Sicherheitsmodul und/oder das zweite Sicherheitsmodul.

Gemäß einem weiteren Aspekt betrifft die Erfindung ein Verfahren zum rechnergestützten Erzeugen eines Gesamtschlüssels mittels eines Schlüsselgenerators mit mehreren Sicherheitsmodulen mit folgenden Verfahrensschritten:
- Berechnen von Teilschlüsseln durch zumindest einen Teil der Sicherheitsmodule anhand eines Eingabeparameters für die jeweiligen Sicherheitsmodule, wobei
   - vorzugsweise durch jedes Sicherheitsmodul ein Teilschlüssel berechnet wird,
   - die Sicherheitsmodule seriell kommunikativ verbunden sind,
   - eines der Sicherheitsmodule ein Eingabesicherheitsmodul ist,
   - zur Generierung eines Gesamtschlüssel dem Eingabesicherheitsmodul ein Initialisierungsparameter als der Eingabeparameter übermittelt wird oder das Eingabesicherheitsmodul einen Initialisierungsparameter als einen ersten Teilschlüssel bereitstellt,
   - jeweils der berechnete Teilschlüssel des jeweiligen Sicherheitsmoduls als Eingabeparameter des darauffolgenden Sicherheitsmoduls übermittelt wird,
- Bereitstellen des letzten Teilschlüssels eines letzten Sicherheitsmoduls der seriell kommunikativ verbundenen Sicherheitsmodule als Gesamtschlüssel.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) des Schlüsselgenerators analog nachzubilden.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass der erfindungsgemäße Schlüsselgenerator erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es den erfindungsgemäßen Schlüsselgenerator erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein zweites Ausführungsbeispiel der Erfindung;
- Fig. 3: ein drittes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

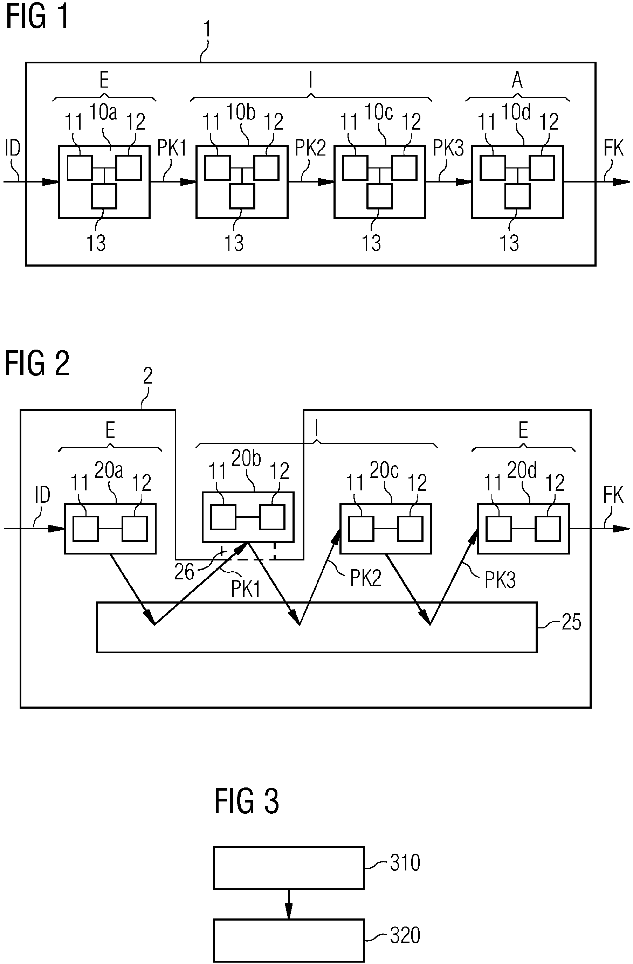

Die Fig. 1 zeigt ein erstes Ausführungsbeispiel der Erfindung. Im Einzelnen ist dabei ein erster Schlüsselgenerator 1 gezeigt.

Der erste Schlüsselgenerator 1 umfasst dabei mehrere Sicherheitsmodule 10a bis 10d, wobei die Sicherheitsmodule 10a bis 10d jeweils eine Schlüsselableitungseinheit 11 zum Berechnen eines Teilschlüssels PK1, PK2, PK3, FK anhand eines Eingabeparameters umfassen. Für die Schlüsselableitungseinheiten 11 können unterschiedliche Schlüsselableitungsverfahren verwendet werden. Zusätzlich umfassen die Sicherheitsmodule 10a bis 10d jeweils vorzugsweise zumindest einen Prozessor 13, eine Speichereinheit 12 und eine Kommunikationsschnittstelle um z. B. mit einem der anderen Sicherheitsmodule zu kommunizieren, ein Initialisierungsparameter ID zu empfangen oder einen Gesamtschlüssel FK bereit zu stellen. Die Einheiten eines jeweiligen Schlüsselgenerators stehen vorzugsweise über einen modulinternen Bus kommunikativ miteinander in Verbindung.

In einer Variante umfassen nicht alle Sicherheitsmodule jeweils eine Schlüsselableitungseinheit, sondern stellen beispielsweise nur einen entsprechenden Teilschlüssel bereit. Vorzugsweise jedoch umfassen alle Sicherheitsmodule jeweils eine Schlüsselableitungseinheit.

Die Sicherheitsmodule 10a bis 10d sind seriell kommunikativ verbunden. Dabei ist das erste Sicherheitsmodul 10a ein Eingabesicherheitsmodul E, dem zur Generierung eines Gesamtschlüssel FK dem Eingabesicherheitsmodul ein Initialisierungsparameter ID als der Eingabeparameter übermittelt wird. Diese kommunikative Verbindung ist vorzugsweise mittels einer Kommunikationsverbindung realisiert.

Die jeweiligen Teilschlüssel PK1, PK2, PK3 des jeweiligen Sicherheitsmoduls werden als Eingabeparameter an das darauffolgenden Sicherheitsmoduls 10b bis 10d übermittelt. Das vierte Sicherheitsmodul 10d ist als Ausgabeschnittstelle oder Ausgabemodul A ausgebildet, die den berechneten (letzten/vierten) Teilschlüssel FK des letzten Sicherheitsmoduls bzw. vierten Sicherheitsmoduls 10d der seriell kommunikativ verbundenen Sicherheitsmodule als Gesamtschlüssel bereitstellt.

Das zweite Sicherheitsmodul 10b und das dritte Sicherheitsmodul 10c sind in diesem Ausführungsbeispiel als interne Sicherheitsmodule I ausgebildet. Das bedeutet insbesondere, dass deren Eingabeparameter jeweils ein Teilschlüssel eines vorhergehenden Sicherheitsmoduls ist, und dass diese nicht den Gesamtschlüssel berechnen, sondern insbesondere nur einen Beitrag zu dessen Berechnung liefern.

Um einen Gesamtschlüssel reproduzierbar anhand der Initialisierungsparameter ID zu berechnen, wird der Initialisierungsparameter ID dem ersten Sicherheitsmodul 10a übermittelt. Das erste Sicherheitsmodul 10a berechnet mit seiner Schlüsselableitungseinheit 11 unter Verwendung eines Schlüsselableitungsverfahrens, das durch seine Schlüsselableitungseinheit 11 implementiert wird, anhand des Initialisierungsparameters ID und mit Hilfe des Prozessors 13 des ersten Sicherheitsmoduls 10a, den ersten Teilschlüssel PK1.

Dieser erste Teilschlüssel PK1 wird dann als Eingabeparameter an das zweite Sicherheitsmodul 10b übertragen. Das zweite Sicherheitsmodul 10b berechnet mit seiner Schlüsselableitungseinheit 11 unter Verwendung eines Schlüsselableitungsverfahrens, das durch seine Schlüsselableitungseinheit 11 implementiert wird, anhand des ersten Teilschlüssels PK1 und mit Hilfe des Prozessors 13 des zweiten Sicherheitsmoduls 10b, den zweiten Teilschlüssel PK2.

Dieser zweite Teilschlüssel PK2 wird dann als Eingabeparameter an das dritte Sicherheitsmodul 10c übertragen. Das dritte Sicherheitsmodul 10c berechnet mit seiner Schlüsselableitungseinheit 11 unter Verwendung eines Schlüsselableitungsverfahrens, das durch seine Schlüsselableitungseinheit 11 implementiert wird, anhand des zweiten Teilschlüssels PK2 und mit Hilfe des Prozessors 13 des dritten Sicherheitsmoduls 10c, den dritten Teilschlüssel PK3.

Dieser dritte Teilschlüssel PK3 wird dann als Eingabeparameter an das vierte Sicherheitsmodul 10d übertragen. Das vierte Sicherheitsmodul 10d berechnet mit seiner Schlüsselableitungseinheit 11 unter Verwendung eines Schlüsselableitungsverfahrens, das durch seine Schlüsselableitungseinheit 11 implementiert wird, anhand des dritten Teilschlüssels PK3 und mit Hilfe des Prozessors 13 des vierten Sicherheitsmoduls 10d, den dritten Teilschlüssel bzw. den Gesamtschlüssel FK.

Es sind auch andere Ausführungsformen denkbar, bei denen die Anzahl der Sicherheitsmodule variiert wird. Beispielsweise könnten anstatt zwei interner Sicherheitsmodule 10b und 10c nur ein einziges Sicherheitsmodul 10b verwendet werden und dieses dann direkt an das vierte Sicherheitsmodul 10d gekoppelt werden bzw. mit diesem kommunikativ verbunden werden bzw. sein.

Mit anderen Worten kann mit der Erfindung ein Gesamtschlüssel berechnet werden, welcher für kryptographische Sicherheitsverfahren benutzt werden kann. Dies erfolgt durch die Kombination und Verkettung von mindestens zwei Sicherheitsmodulen (die auch als Vertrauensanker bezeichnet werden können). Dabei wird der Gesamtschlüssel nicht am Ende durch die Summe aller einzelnen Teilschlüssel der jeweiligen Sicherheitsmodule gebildet, sondern direkt vom letzten in der Kette vorhandenen Sicherheitsmodul, wobei jegliche Teilschlüssel der vorherigen Sicherheitsmodule in die Berechnung des Gesamtschlüssels mit einfließen.

Somit muss die Berechnung eines Gesamtschlüssels nicht von einem Prozessor durchgeführt werden. Die Kommunikation kann dabei über einen Prozessor erfolgen oder über einen separaten Kommunikationslink (z.B. I2C, SPI) direkt zwischen den einzelnen Sicherheitsmodulen.

Ein Sicherheitsmodul kann ein Hardware-gebundener Schlüsselspeicher, wie z.B. ein TPM, ein HSM oder ein FPGA basierter Schlüsselspeicher, sein. Je nach Anforderung kann das Sicherheitslevel (auch Sicherheitsniveau genannt) variieren. Sicherheitsmodule können z. B. seitenkanalgehärtet oder "Tamper"-resistent sein. Dies kann beispielsweiseweise mittels Sicherheitseinheiten erfolgen.

Nachfolgend wird die Berechnung des Gesamtschlüssels erläutert. Die Berechnung des Gesamtschlüssels wird nicht durch die Summe der einzelnen Teilschlüssel ermittelt. Mehrere Sicherheitsmodule (mindestens zwei) werden verkettet und so verschaltet, dass die einzelnen Teilschlüssel und demzufolge auch der Gesamtschlüssel von allen vorherigen Teilschlüsseln abhängen.

Genauer gesagt, fließt jeweils der vorherige Teilschlüssel, welcher seinerseits von seinem vorherigem Teilschlüssel abhängt, als Eingabeparameter (insbesondere auch als Ableitungsparameter bezeichenbar) in die Schlüsselableitungseinheit (z. B. mittels einem Schlüsselableitungsverfahren - auch Schlüsselableitungsfunktion (KDF) - implementiert) des jeweiligen Sicherheitsmoduls mit ein.

Als Schlüsselableitungsverfahren kann z. B. ein HMAC-SHA256 verwendet werden. Der Teilschlüssel des letzten Sicherheitsmoduls in der Kette (auch als seriell kommunikativ verbundene Sicherheitsmodule bezeichnet) entspricht dem Gesamtschlüssel.

Dabei hat insbesondere eine Änderung des ersten Ableitungsparameters für die erste Schlüsselableitungsfunktion zur Folge, dass sich sämtliche Teilschlüssel und folglich auch der Gesamtschlüssel ändert.

Der genaue Vorgang der Gesamtschlüsselberechnung funktioniert wie folgt:
1) i = 1: PK₁ = KDF₁(MK₁, ID)
2) 1 < i ≤ n: PKᵢ = KDFᵢ(MKᵢ, PKᵢ₋₁)
3) FK = PKₙ

Der erste Teilschlüssel PK₁ wird durch das erste Schlüsselableitungsverfahren KDF₁, den Initialisierungsparameter ID (der als Eingabeparameter dient) und dem Master Schlüssel MK₁ (z. B. ein privater kryptographischer Schlüssel eines asymmetrischen kryptographischen Verfahrens) des ersten Sicherheitsmoduls berechnet und beispielsweise einem Prozessor zur Verfügung gestellt. Bei dem Master Schlüssel kann es sich um sensitive Daten handeln. Anstelle des/eines Master Schlüssels können jedoch auch andere sensitive Daten verwendet werden.

Nachfolgend berechnet das zweite Sicherheitsmodul den zweiten Teilschlüssel PK₂. Dabei fließt in sein Schlüsselableitungsverfahren KDF₂ sein Master Schlüssel MK₂ und der vorherige Teilschlüssel PK₁ des ersten Sicherheitsmoduls mit ein. Das nächste Sicherheitsmodul in der Kette berechnet daraufhin auf dieselbe Art den nächsten Teilschlüssel PKᵢ. Der Teilschlüssel des letzten Sicherheitsmoduls in der Kette entspricht dem Gesamtschlüssel FK.

Bei den Master Schlüsseln MKᵢ eines jeweiligen Sicherheitsmoduls handelt es sich um sensible Daten, die in der Speichereinheit 12 des jeweiligen Sicherheitsmoduls geschützt gespeichert sind. Der entsprechende Schutz wird dabei beispielsweise durch die Sicherheitseinheit realisiert.

Erfolgt die Kommunikation zwischen den Sicherheitsmodulen beispielsweise über einen Prozessor (z. B. einer CPU), muss eine entsprechende Kommunikationsschnittstelle zwischen Prozessor und Vertrauensanker vorzugsweise entsprechend geschützt werden. Bei Verwendung eines FPGAs als Sicherheitsmodul eignet sich beispielsweise ein System-on-Chip, auf welchem die CPU und der FPGA auf einem Chip vereint sind. Dadurch ist keine externe Anbindung nötig, welche abhörbar ist. Bei Verwendung eines TPMs als Sicherheitsmodul eignet sich beispielsweise ein Firmware TPM, welcher direkt in der CPU integriert ist.

In einer Variante ist es ebenfalls möglich, dass ein Sicherheitsmodul auf der CPU selbst realisiert ist, z. B. in Form eines obfuszierten Software-basierten Vertrauensankers, in Form einer Trust Zone Applikation, in Form einer integrierten Hardware-Crypto-Funktion (HW Crypto Engine) oder in Form eines Programmcodes für eine geschützte Codeausführung (Intel TXT, Intel SGX) auf der CPU.

Eine weiteres Ausführungsbeispiel, das sich insbesondere mit dem in Fig. 1 gezeigten Ausführungsbeispiel kombinieren lässt, ist in Fig. 2 gezeigt.

Im Einzelnen zeigt die Fig. 2 einen zweiten Schlüsselgenerator 2 bei dem die Kommunikation zwischen den Sicherheitsmodulen über einen Prozessor 25, z. B. eine CPU, realisiert ist. Dabei kann der zweite Schlüsselgenerator 2 auch eine Variante des ersten Schlüsselgenerators 1 sein. Die Sicherheitsmodule 20a bis 20d des zweiten Schlüsselgenerators umfassen im Gegensatz zu den Sicherheitsmodulen des ersten Schlüsselgenerators 1 keinen eigenen Prozessor, sondern nutzen vorzugsweise den Prozessor 25 des zweiten Schlüsselgenerators für die Berechnung der Teilschlüssel PK1 bis PK3 bzw. für die Berechnung des Gesamtschlüssels FK. Zusätzlich ist das zweite Sicherheitsmodul 20b des zweiten Schlüsselgenerators 2 als wechselbares Sicherheitsmodul ausgebildet, das über eine kommunikativ ausgebildete Steckverbindung 26 (z. B. eine USB Verbindung) in die Kette von Sicherheitsmodulen eingefügt werden kann bzw. den seriell kommunikativ verbundenen Sicherheitsmodulen hinzugefügt werden kann. Insbesondere hat das vorgegebene Sicherheitsmodul eine vorgegebene Position in der Kette von Sicherheitsmodulen bzw. bei den seriell kommunikativ verbundenen Sicherheitsmodulen. Ist beispielsweise das wechselbare Sicherheitsmodul nicht eingefügt, kann beispielsweise der Gesamtschlüssel FK nicht berechnet werden. Alternativ wäre denkbar, dass beispielsweise ein kryptographisch schwächerer Gesamtschlüssel bzw. ein andere Gesamtschlüssel gebildet werden, wenn das wechselbare Sicherheitsmodul nicht eingesteckt ist.

Es ist auch denkbar, dass die unterschiedlichen Sicherheitsmodule des im ersten Ausführungsbeispiel (und der erläuterten Varianten) gezeigten ersten Schlüsselgenerators mit den Sicherheitsmodulen des im zweiten Ausführungsbeispiel gezeigten zweiten Sicherheitsmoduls kombiniert werden. So kann beispielsweise eines der Sicherheitsmodule des ersten Schlüsselgenerators ein wechselbares Sicherheitsmodul mit oder ohne eigenen Prozessor sein - analog zum zweiten Sicherheitsmodul 20b des zweiten Schlüsselgenerators 2. Auch können die Sicherheitsmodule selbst auf unterschiedliche Weise miteinander kombiniert werden, z. B. in dem Sicherheitsmodule mit und ohne eigenen Prozessor miteinander kombiniert werden. Ist es beispielsweise für ein Sicherheitsmodul ohne Prozessor notwendig komplexe Berechnungen durchzuführen, kann es hierzu auf den Prozessor des Schlüsselgenerators zurückgreifen. Sollte ein solche Kombination für den ersten Schlüsselgenerator 1 realisiert werden, so umfasst dieser ggf. einen Prozessor analog zum zweiten Schlüsselgenerator 2.

Das wechselbare Sicherheitsmodul kann beispielsweise auf einer wechselbaren Hardwareplattform realisiert sein. Beispielsweise auf einem ansteckbaren Dongle, Konfigurationsspeichermodul, 10-Modul oder Erweiterungsmodul. Dies hat den Vorteil, dass ein Schlüssel nur bildbar ist, wenn alle Hardwarekomponenten vorliegen. Weiterhin ist dies vorteilhaft, wenn eine Plug-and-Work-Konfiguration einer Anlage erfolgt: Dann ist ein Schlüssel nur in einer bestimmten Hardware-Konfiguration bildbar.

Mit anderen Worten ist es vorteilhaft, wenn zumindest eines der Sicherheitsmodule als wechselbares Sicherheitsmodul ausgebildet ist. Es ist auch denkbar, dass mehrere der Sicherheitsmodule als wechselbare Sicherheitsmodule ausgebildet sind und jeweils eine unterschiedliche Hardwareplattform verwenden.

In einer weiteren Variante kann ein physikalisches Sicherheitsmodul, z. B. ein TPM, mehrfach mit unterschiedlichen Master Schlüsseln oder Schlüsselableitungsparametern verwendet werden. Das so verwendete physikalische Sicherheitsmodul kann dabei mehrere logische Sicherheitsmodule realisieren: So kann z. B. ein Sicherheitsmodul für eine Schlüsselableitung mehrfach verwendet werden, wobei die verwendeten Master Schlüssel (die nur innerhalb des Sicherheitsmoduls vorliegen) an unterschiedliche physikalische Bindungseigenschaften (z. B. Plattformkonfigurationsregister) gebunden sind.

Mittels der logischen Sicherheitsmodule lässt sich beispielsweise ein Schlüsselgenerator realisieren, bei dem es z. B. nur ein physikalisches internes Sicherheitsmodul gibt, jedoch dieses Sicherheitsmodul z. B. mehrere Schlüsselableitungsverfahren implementiert oder unterschiedliche sensitive Daten umfasst, die mit den entsprechenden Schlüsselableitungsverfahren kombiniert werden, um logische Sicherheitsmodul zu realisieren. Entsprechend können mittels dieses physikalischen internen Sicherheitsmoduls z. B. mehrere zusätzliche logische interne Sicherheitsmodule realisiert werden, indem z. B. jeweils unterschiedliche Master Schlüssel für die Berechnung eines jeweiligen Teilschlüssels verwendet werden.

So kann z. B. eine Schlüsselableitung erfolgen, wobei ein an die BIOS-Integritätsmessungen gebundener Master Schlüssel verwendet wird, und eine zweite Schlüsselableitung unter Nutzung eines Masterschlüssels, der an die Betriebssystem-Integritätsmessung gebunden ist. Dies lässt sich beispielsweise mit einem Trusted Platform Module (TPM) und seinen PCRs (Platform Configuration Register) realisieren (oder alternativ andere Varianten von Sicherheitsmodulen). Die PCRs können während eines Bootvorgangs durch Integritätsmessungen der einzelnen Boot Komponenten erweitert werden. Daten, wie z.B. kryptographische Schlüssel lassen sich mit Hilfe von PCR Werten sealen. Das bedeutet, dass diese Daten nur dann durch den TPM in entschlüsselter Form ausgegeben werden, wenn dessen vordefinierte PCR Werte, also die Integritätsmessungen der Boot Komponenten, integer sind. Somit lässt sich die Ausgabe von Daten direkt mit der Integrität von beispielsweise BIOS oder Betriebssystem verknüpfen.

In einer weiteren Variante kann eine Schlüsselableitung erfolgen, die an die dynamische Integritätsmessung einer Applikationssoftware gebunden ist, die z.B. in einer gemäß Intel TXT geschützten Ausführungsumgebung ausgeführt wird. Beispielsweise wird ein Hashwert der Applikation berechnet und mit einem sicher abgespeicherten Referenzwert verglichen. Hierbei kann ebenfalls der Master Schlüssel anhand dieser Daten gebildet werden oder diese Daten gehen als weitere Ableitungsparameter in das Schlüsselableitungsverfahren ein.

In einer weiteren Variante ist es möglich, dass ein Zwischenergebnis einer Schlüsselableitung eines Teilschlüssels verschlüsselt bereitgestellt und/oder zwischengespeichert wird, sodass es nur auf dem gleichen Sicherheitsmodul wieder für eine weitere Schlüsselableitung verwendbar ist, jedoch zu einem späteren Zeitpunkt.

Dies ist vorteilhaft, um Schlüsselableitungen durch unterschiedliche Softwarekomponenten durchführen zu können (z.B. Pre-Boot Environment, Bootcode, Applikations-Start).

Die Erfindung und seine beschriebenen Varianten ermöglichen es, dass insbesondere zu keinem Zeitpunkt alle nötigen Teilschlüssel im Betriebssystem vorhanden sein müssen. Der jeweilige vorherige Teilschlüssel dient jeweils als Art Passwort, um den nächsten Teilschlüssel oder am Ende den Gesamtschlüssel generieren zu können.

Durch die Kompromittierung eines einzelnen Sicherheitsmoduls kann nicht der Gesamtschlüssel ermitteln werden. Weiterhin ist die Konstruktion über verkettete Schlüsselableitungen vorteilhaft, da hierbei keine exportkontrollbeschränkten Ver-/Entschlüsselungsoperationen benötigt werden.

In einer weiteren Variante werden zwei Hardware-basierten Sicherheitsmodule miteinander kombiniert. Dabei ist das erste Sicherheitsmodul (Eingabesicherheitsmodul) als Trusted Platform Module (TPM) und das zweite Sicherheitsmodul (Ausgabeschnittstelle oder Ausgabesicherheitsmodul oder letztes Sicherheitsmodul) als FPGA realisiert. Der ermittelte Gesamtschlüssel wird dazu verwendet, z. B. um einen OpenSSL Schlüsselspeicher zu öffnen.

Der Vorgang funktioniert wie folgt:
1) Der TPM enthält einen zuvor in einer sicheren Umgebung geladenen geheimen Schlüssel (Master Schlüssel oder Schlüssel für ein kryptographisches Verfahren). Dieser wird durch ein Kommando ausgelesen und an die CPU geschickt.
2) Das FPGA basierte Sicherheitsmodul wird von der CPU angestoßen, einen abgeleiteten Schlüssel zu berechnen. Als Schlüsselableitungsfunktion/Schlüsselableitungsverfahren wird beispielsweise ein HMAC-SHA-256 benutzt, wobei ein auf dem FPGA gespeicherter Master Schlüssel und jener zuvor berechneter TPM Teilschlüssel in die Berechnung mit einfließen.
3) Der auf dem FPGA abgeleitete Schlüssel wird ausgelesen und dafür benutzt, einen OpenSSL Schlüsselspeicher zu öffnen. In einer anderen Variante kann das FPGA basierte Sicherheitsmodul zur ersten Teilschlüsselberechnung und der TPM zu Gesamtschlüsselberechnung verwendet werden.

In einer weiteren Variante wird ein Firmware TPM benutzt, bei dem es keine angreifbare Schnittstelle zwischen TPM und CPU gibt.

In einer weiteren Variante wird ein System-on-Chip verwendet, auf welchem die CPU und das FPGA basierte Sicherheitsmodul auf einem Chip vereint sind.

In einer weiteren Variante wird ein Sicherheitsmodul öfters als einmal für eine Teilschlüsselberechnung verwendet, sofern er mehrere Master Schlüssel enthält. Hierdurch lassen sich insbesondere - wie oben erläutert - z. B. logische Sicherheitsmodule realisieren.

In einer weiteren Variante erfolgt die Teilschlüsselberechnung in unterschiedlichen Bootphasen, beispielsweise eines Feldgerätes oder Geräte eines Automatisierungsnetzes.

In einer weiteren Variante ist die kryptographische Sicherheitsfunktion im letzten Sicherheitsmodul integriert und wird direkt dort ausgeführt, sodass der Gesamtschlüssel nie im Betriebssystem vorhanden ist bzw. in einem vom Betriebssystem verwalteten Speicher vorhanden ist.

Die dargestellten Schlüsselgeneratoren können beispielsweise zusätzlich noch eine weitere oder mehrere weitere Komponente/n umfassen, wie beispielsweise einen weiteren Prozessor, eine weitere Speichereinheit, ein Eingabegerät, insbesondere eine Computertastatur oder eine Computermaus, und ein Anzeigegerät (z. B. einen Monitor) umfassen. Der weitere Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über einen Bus des jeweiligen Schlüsselgenerators miteinander kommunikativ verbunden sein.

Die Fig. 3 zeigt ein drittes Ausführungsbeispiel der Erfindung. Im Einzelnen zeigt die Fig. 3 ein Ablaufdiagramm der Erfindung.

Das Verfahren ist vorzugsweise rechnergestützt realisiert.

Im Einzelnen wird in diesem Ausführungsbeispiel ein Verfahren zum rechnergestützten Erzeugen eines Gesamtschlüssels mittels eines Schlüsselgenerators mit mehreren Sicherheitsmodulen realisiert.

Das Verfahren umfasst dabei einen ersten Verfahrensschritt 310 zum Berechnen von Teilschlüsseln durch zumindest einen Teil der Sicherheitsmodule anhand eines Eingabeparameters für die jeweiligen Sicherheitsmodule, wobei die Sicherheitsmodule seriell kommunikativ miteinander verbunden sind. Die jeweiligen Sicherheitsmodule (insbesondere der internen Sicherheitsmodule) vorzugsweise mit ihrem jeweiligen direkt benachbarten Sicherheitsmodul kommunikativ verbunden sind.

Dabei ist eines der Sicherheitsmodule ein Eingabesicherheitsmodul, wobei dies vorzugsweise das erste Sicherheitsmodul ist.

Zu einer Generierung eines Gesamtschlüssels wird dem Eingabesicherheitsmodul ein Initialisierungsparameter als der Eingabeparameter übermittelt oder das Eingabesicherheitsmodul stellt einen Initialisierungsparameter als einen ersten Teilschlüssel bereit.

Dabei wird jeweils der berechnete Teilschlüssel des jeweiligen Sicherheitsmoduls als Eingabeparameter an das darauffolgende Sicherheitsmodul übermittelt.

Das Verfahren umfasst einen zweiten Verfahrensschritt 320 zum Bereitstellen des letzten Teilschlüssels eines letzten Sicherheitsmoduls der seriell kommunikativ miteinander verbundenen Sicherheitsmodule als Gesamtschlüssel.

Die Erfindung betrifft die Nutzung und Kombination von zwei oder mehreren Sicherheitsmodulen zur sicheren Berechnung eines Gesamtschlüssels, wobei nie mehr als ein Teilschlüssel für die Berechnung des Gesamtschlüssels im Betriebssystem vorhanden ist. Die Sicherheitsmodule (die beispielsweise auch als Vertrauensanker bezeichnet werden können) können dabei beispielsweise Trusted Platform Module, als Hardware Security Module implementiert werden. Auch ist insbesondere durch die Verteilung der Geheimnisse auf mehrere Sicherheitsmodule die Berechnung des Gesamtschlüssels auf mehrere Instanzen verteilt. Die Berechnung des Gesamtschlüssels muss insbesondere nicht von der CPU durchgeführt werden, sondern wird vorzugsweise vom letzten Sicherheitsmodul in der Kette (also insbesondere die seriell kommunikativ verbundenen Sicherheitsmodule) berechnet. Weiterhin können insbesondere den Sicherheitsmodulen flexibel eine oder mehrere schlüsselgeneratorinterne wie auch wie auch eine oder mehrere schlüsselgeneratorexterne Sicherheitsmodule oder mehrere logische Sicherheitsmodule verwendet werden. Dies ist insbesondere dahingehend vorteilhaft, um beispielsweise durch einen Wechseln eines schlüsselgeneratorexternen Sicherheitsmoduls (insbesondere auch wechselbares Sicherheitsmodul genannt) eine kryptographische Sicherheit oder ein Sicherheitsniveau nachträglich noch verändern bzw. verbessern zu können. Es kann beispielsweise auch notwendig sein, dass das Sicherheitsniveau aufgrund von Exportbeschränkungen verringert werden muss, so kann beispielsweise durch den Austausch eines schlüsselgeneratorexternen Sicherheitsmoduls mit einem hohen Sicherheitsniveau durch ein schlüsselgeneratorexternes Sicherheitsmodul mit einem niedrigeren Sicherheitsniveau die Anforderung der Exportbeschränkung erfüllt werden ohne den gesamten Schlüsselgenerator austauschen zu müssen. Der Gesamtschlüssel kann insbesondere reproduzierbar anhand der gleichen Initialisierungsparameter mittels des Schlüsselgenerators berechnet werden.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Schlüsselgenerator aufweisend:
- mehrere Sicherheitsmodule, wobei
- zumindest ein Teil der Sicherheitsmodule jeweils eine Schlüsselableitungseinheit zum Berechnen eines Teilschlüssels anhand eines Eingabeparameters umfassen,
- die Sicherheitsmodule seriell kommunikativ verbunden sind,
- eines der Sicherheitsmodule ein Eingabesicherheitsmodul ist,
- zur Generierung eines Gesamtschlüssel dem Eingabesicherheitsmodul ein Initialisierungsparameter als der Eingabeparameter übermittelt wird oder das Eingabesicherheitsmodul einen Initialisierungsparameter als einen ersten Teilschlüssel bereitstellt,
- jeweils der berechnete Teilschlüssel des jeweiligen Sicherheitsmoduls als Eingabeparameter des darauffolgenden Sicherheitsmoduls übermittelt wird,
- eine Ausgabeschnittstelle, die den berechneten Teilschlüssel eines letzten Sicherheitsmoduls der seriell kommunikativ verbundenen Sicherheitsmodule als Gesamtschlüssel bereitstellt.

2. Schlüsselgenerator nach Anspruch 1, wobei die jeweiligen Sicherheitsmodule mit dem direkt benachbarten Sicherheitsmodul direkt kommunikativ verbunden sind.

3. Schlüsselgenerator nach Anspruch 1, wobei die jeweiligen Sicherheitsmodule mit dem direkt benachbarten Sicherheitsmodul über einen Prozessor kommunikativ verbunden sind.

4. Schlüsselgenerator nach einem der vorhergehenden Ansprüche, wobei
- die Schlüsselableitungseinheiten jeweils ein Schlüsselableitungsverfahren implementieren,
- die Schlüsselableitungsverfahren vorzugsweise von mindestens zwei verschiedenen Typen sind.

5. Schlüsselgenerator nach einem der vorhergehenden Ansprüche, wobei
- die Sicherheitsmodule jeweils eine Sicherheitseinheit umfassen,
- die Sicherheitseinheiten von vorzugsweise mindestens zwei unterschiedlichen Typen sind,
- ein jeweiliges Sicherheitsmodul vorzugsweis nur eine Sicherheitseinheit eines bestimmten Typs umfasst.

6. Schlüsselgenerator nach einem der vorhergehenden Ansprüche, wobei
- den Sicherheitsmodulen jeweils ein Sicherheitsniveau zugeordnet ist,
- die Sicherheitsniveaus von vorzugsweise mindestens zwei unterschiedlichen Typen sind.

7. Schlüsselgenerator nach einem der vorhergehenden Ansprüche, wobei
- die Sicherheitsmodule mindestens zwei Sicherheitsmodule, die auf Basis unterschiedlicher Plattformen implementiert sind.

8. Schlüsselgenerator nach einem der vorhergehenden Ansprüche, wobei
- die seriell kommunikativ verbunden Sicherheitsmodule mindestens drei Sicherheitsmodule umfassen,
- das erste Sicherheitsmodul das Eingabesicherheitsmodul ist;
- das zweite Sicherheitsmodul mindestens ein internes Sicherheitsmodul ist, wobei das zweite Sicherheitsmodul vorzugsweise mehrere interne Sicherheitsmodule umfasst;
- das dritte Sicherheitsmodul das letzte Sicherheitsmodul ist.

9. Schlüsselgenerator nach Anspruch 8, wobei die internen Sicherheitsmodule jeweils eine Sicherheitseinheit umfassen, die eine schlüsselgeneratorexterne Kommunikation unterbindet.

10. Schlüsselgenerator nach Anspruch 8 oder 9, wobei die internen Sicherheitsmodule ein niedrigeres Sicherheitsniveau aufweisen als das erste Sicherheitsmodul und/oder das zweite Sicherheitsmodul.

11. Verfahren zum rechnergestützten Erzeugen eines Gesamtschlüssels mittels eines Schlüsselgenerators mit mehreren Sicherheitsmodulen mit folgenden Verfahrensschritten:
- Berechnen von Teilschlüsseln durch zumindest einen Teil der Sicherheitsmodule anhand eines Eingabeparameters für die jeweiligen Sicherheitsmodule, wobei
- die Sicherheitsmodule seriell kommunikativ verbunden sind,
- eines der Sicherheitsmodule ein Eingabesicherheitsmodul ist,
- zur Generierung eines Gesamtschlüssel dem Eingabesicherheitsmodul ein Initialisierungsparameter als der Eingabeparameter übermittelt wird oder das Eingabesicherheitsmodul einen Initialisierungsparameter als einen ersten Teilschlüssel bereitstellt,
- jeweils der berechnete Teilschlüssel des jeweiligen Sicherheitsmoduls als Eingabeparameter des darauffolgenden Sicherheitsmoduls übermittelt wird,
- Bereitstellen des letzten Teilschlüssels eines letzten Sicherheitsmoduls der seriell kommunikativ verbundenen Sicherheitsmodule als Gesamtschlüssel.

12. Computerprogrammprodukt mit Programmbefehlen zur Durchführung des Verfahrens nach Anspruch 11.

13. Computerprogrammprodukt mit Programmbefehlen für ein Erstellungsgerät, das mittels der Programmbefehle konfiguriert wird, um einen Schlüsselgenerator nach einem der Ansprüche 1-10 zu erstellen.

14. Bereitstellungsvorrichtung für das Computerprogrammprodukt nach Anspruch 12 und/oder 13, wobei die Bereitstellungsvorrichtung das Computerprogrammprodukt speichert und/oder bereitstellt.
